# EUROPEAN PATENT APPLICATION

(11) **EP 4 052 896 A1**
(43) Date of publication of application: **07.09.2022**
(21) Application number: 21160910.2
(22) Date of filing: 05.03.2021
(51) Int. Cl.: B32B 5/18, B32B 7/12, B32B 15/04, B32B 15/08, B32B 15/085, B32B 15/12, B32B 15/20, B32B 27/10, B32B 27/18, B32B 27/32, B32B 29/00, F25D 23/06

(54) **A COVERING FOR A REFRIGERATOR**

(71) Applicant: Walki Group Oy, 02170 Espoo (FI)
(72) Inventor: VIITANEN, Heikki, 02170 Espoo (FI); RINKINEN, Juuso, 02170 Espoo (FI)
(74) Representative: Berggren Oy

(57) **Abstract**

The invention relates to a covering (10) for a back panel of a refrigerator, the covering comprising a first flame retardant part (100) forming a first surface (11) of the covering and comprising a first flame retardant layer (120), which is an aluminum layer having a thickness (t120) in a range between 5 µm and 50 µm, and a first attachment layer (130) comprising at least one of the following layers: a layer of an extrudable polymer having a specific mass in a range between 7 g/m² and 80 g/m², and a layer of glue having a specific mass in a range between 0.5 g/m² and 15 g/m². The covering further comprises a flame retardant support part (300) comprising a flame retardant support layer (320) having a specific mass in a range between 100 g/m² and 800 g/m², the flame retardant support layer (320) comprising cellulose based fibrous material, and a flame retardant chemical. The invention further relates to a back panel for a refrigerator.

## Description

### Technical field

The specification relates to coverings suitable for refrigerators. The specification further relates to back panels for refrigerators.

### Background

Thermal insulating materials, such as polyurethane, are commonly used in refrigerators. Further, a back panel comprising a thermal insulating material and a covering is commonly used in refrigerators. The covering can be used to protect the thermal insulating material. The covering may have, for example, a metal layer to protect the thermal insulating material. However, there is still a need for an improved covering for refrigerators.

### Summary

It is an aim of this specification to provide a covering suitable for a refrigerator, particularly for a back panel of a refrigerator.

Aspects of the invention are characterized by what is stated in the independent claims. Preferred embodiments are disclosed in the dependent claims. These and other embodiments are disclosed in the description and figures.

Thermal insulation materials of refrigerators may comprise easily flammable materials. To improve fire resistivity of a back panel comprising thermal insulation material(s), the novel solution discloses a multilayer structure for a covering, the covering improving fire resistivity of the back panel, at least to some extent. The novel multilayer structure comprises a flame retardant support part.

The covering can be configured to be applied on a thermally insulating material.

The covering comprises a first surface, i.e. an outer surface of the covering and a second surface, i.e., an inner surface of the covering. The outer surface of the covering can be arranged to be the outermost surface of a back panel. The inner surface of the covering can be arranged to be adjacent to a thermal insulation material, and preferably to be attached therein. Thus, the inner surface of the covering, to be applied on a thermally insulating material, may be selected to adhere well to the insulation material.

The covering comprises a first flame retardant part forming the first surface of the covering. The first flame retardant part comprises a first flame retardant layer. The first flame retardant layer is an aluminum layer having a thickness in a range between 5 µm and 50 µm, preferably in a range between 9 µm and 30 µm. The thickness of said aluminum layer may be at least 5 µm, preferably at least 7 µm, more preferably at least 9 µm, and most preferably at least 11 µm. Further, the thickness of the aluminum layer may be equal to or less than 50 µm, preferably equal to or less than 40 µm, more preferably equal to or less than 30 µm, and most preferably equal to or less than 25 µm. The first flame retardant layer may improve fire resistance of the covering. The first flame retardant layer may further protect the flame retardant support part of the covering e.g. from humidity. Further, the first flame retardant layer, i.e., the aluminum layer, may improve stiffness of the product.

The first flame retardant part may further comprise a first lacquer layer on the first flame retardant layer. The first lacquer layer may improve visual appearance of the covering. The first lacquer layer may further protect the first flame retardant layer and/or the support part. Particularly, the lacquer layer, if used, may prevent a surface of the aluminum from being easily oxidized. Thus, preferably, the first lacquer layer is applied directly on the aluminum layer.

The first flame retardant part may further comprise a printing layer on the lacquer layer, covering at least part of the lacquer layer. However, the printing layer is not necessarily needed for the covering, but it is merely an optional layer of the covering e.g. for providing information.

The first flame retardant part further comprises a first attachment layer to attach the first flame retardant part to another part of the covering. The first attachment layer can comprise at least one of, and preferably only one of:
- a layer of an extrudable polymer, preferably a flame retardant extrudable polymer, the layer of the polymer having a specific mass in a range between 7 g/m² and 80 g/m², preferably in a range between 15 g/m² and 30 g/m², and
- a layer of glue, preferably a layer of a flame retardant glue, the layer of glue having a specific mass in a range between 0.5 g/m² and 15 g/m², preferably in a range between 2 g/m² and 7 g/m².

If the first attachment layer comprises the layer of a glue, the layer may have a specific mass of at least 0.5 g/m², preferably equal to or more than 1 g/m², more preferably equal to or more than 1.5 g/m², and most preferably equal to or more than 2 g/m². Further, the layer may have a specific mass of equal to or less than 15 g/m², preferably equal to or less than 10 g/m², more preferably equal to or less than 8 g/m², and most preferably equal to or less than 7 g/m². Thus, the attachment layer may provide good adhesion for layers to be attached to each other. Further, the attachment layer may be manufactured cost efficiently. The glue may be, e.g. a dispersion adhesive, such as water based adhesive or 2-component adhesive.

If the first attachment layer comprises the layer of an extrudable polymer, the layer may have a specific mass of at least 7 g/m², preferably equal to or more than 10 g/m², more preferably equal to or more than 13 g/m², and most preferably equal to or more than 15 g/m². Further, the layer may have a specific mass of equal to or less than 80 g/m², preferably equal to or less than 60 g/m², more preferably equal to or less than 40 g/m², and most preferably equal to or less than 30 g/m². Thus, the attachment layer may provide good adhesion for layers to be attached to each other. Further, the attachment layer may be manufactured cost efficiently.

Thanks to the first attachment layer, an adhesive layer may be formed between the first flame retardant part and another flame retardant part of the covering. Thus, the first attachment layer may be arranged to form an adhesive layer between the first flame retardant layer and e.g. a flame retardant paper or board. Further, if the first attachment layer comprises a flame retardant polymer and/or glue, fire performance of the covering may be improved. Further, thanks to the first attachment layer attaching adjacent layers firmly one to another, a stiffness of the product may be improved.

The first flame retardant layer is preferably attached to another flame retardant layer by using the first attachment layer. Therefore, in an embodiment, only the first attachment layer is between the first flame retardant layer and
- the second flame retardant layer, or
- the flame retardant support layer.

The first flame retardant part may be arranged to improve fire resistance of the covering. Further, the first flame retardant part may be arranged to protect inner parts of the covering e.g. from humidity. Still further, the first flame retardant part may work as a diffusion barrier. Furthermore, the first flame retardant part may increase stiffness of the product. Thus, thanks to the first flame retardant part, the covering may be easily installed on the back panel of a refrigerator.

The covering may further comprise a second flame retardant part comprising a second flame retardant layer. In this embodiment, the second flame-retardant layer is an aluminum layer. The second flame retardant layer can have a thickness in a range between 5 µm and 50 µm, preferably in a range between 9 µm and 30 µm. The thickness of the aluminum layer may be at least 5 µm, preferably at least 7 µm, more preferably at least 9 µm, and most preferably at least 11 µm. Further, the thickness of the aluminum layer may be equal to or less than 50 µm, preferably equal to or less than 40 µm, more preferably equal to or less than 30 µm, and most preferably equal to or less than 25 µm. The second flame retardant layer may improve fire resistance of the covering. Further, the second flame retardant layer may improve a diffusion barrier of the covering. Further, the second flame retardant layer may improve stiffness of the product.

The second flame retardant part may further comprise a second attachment layer. The second attachment layer can comprise an extrudable polymer layer, preferably a layer of an extrudable flame retardant polymer.

If the second attachment layer comprises the layer of an extrudable polymer, the layer may have a specific mass of at least 7 g/m², preferably equal to or more than 10 g/m², more preferably equal to or more than 13 g/m², and most preferably equal to or more than 15 g/m². Further, the layer may have a specific mass of equal to or less than 80 g/m², preferably equal to or less than 60 g/m², more preferably equal to or less than 40 g/m², and most preferably equal to or less than 30 g/m².

Thanks to the extrudable polymer layer, the second attachment layer may be easily formed on a predetermined surface of the covering. Further, a stiffness of the product may be improved. Still further, the polymer layer may form a diffusion barrier.

Alternatively, or in addition, the second attachment layer may comprise a glue layer, preferably a layer of a flame retardant glue. If the second attachment layer comprises the layer of a glue, e.g. the flame retardant glue, the layer may have a specific mass of at least 0.5 g/m², preferably equal to or more than 1 g/m², more preferably equal to or more than 1.5 g/m², and most preferably equal to or more than 2 g/m². Further, the layer may have a specific mass of equal to or less than 15 g/m², preferably equal to or less than 10 g/m², more preferably equal to or less than 8 g/m², and most preferably equal to or less than 7 g/m². Thanks to the glue layer, the second attachment layer may be easily formed on a surface of the covering. Further, a stiffness of the product may be improved. Still further, the glue layer may form a diffusion barrier.

Thanks to the second attachment layer, an adhesive layer may be formed between the second flame retardant part and another part of the covering. Further, if the second attachment layer comprises a flame retardant polymer and/or a flame retardant glue, fire performance of the covering may be improved. Further, thanks to the second attachment layer attaching adjacent structures firmly one to another, a stiffness of the product may be improved.

Thus, the second attachment layer may be arranged to attach the second part to another surface. The second attachment layer may be left in between the second flame retardant layer and the second surface of the covering. Thus, in an advantageous embodiment, the second attachment layer forms the second surface of the covering. Thus, the second attachment layer may be arranged to attach the covering to a thermal insulating material.

In an embodiment, the second flame retardant layer is attached to the flame retardant support layer by using the second attachment layer. Therefore, in an embodiment, only the second attachment layer is between the second flame retardant layer and the flame retardant support layer.

As discussed, the covering comprises the support part comprising the flame retardant support layer. The flame retardant support layer can comprise cellulose based fibrous material. The flame retardant support layer can comprise, at least mainly comprise, or consist of
- at least one paper and/or a board, and
- a flame retardant chemical.
In an embodiment, the above-mentioned components form at least 90 wt.%, preferably at least 95 wt.%, of the flame retardant support layer.

The flame retardant chemical may be coated onto the cellulose based fibrous material, such as onto the paper and/or board, or impregnated to the cellulose based fibrous material. Preferably, in order to further improve fire resistivity of the support part, the flame retardant chemical is at least partly impregnated into the paper and/or board. Thanks to the flame retardant support layer, fire performance of the covering may be substantially improved. Further, at the same time, the flame retardant support layer may improve mechanical properties of the covering.

Thus, the flame retardant support layer is preferably a flame retardant paper and/or a flame retardant board. The flame retardant support layer can substantially improve fire resistance of the covering. The flame retardant support layer may further improve internal strength of the covering and e.g. support the aluminum layer(s) from external stress.

The flame retardant support layer can have specific mass in a range between 100 g/m² and 800 g/m². Thus, the flame retardant support layer may be able to improve fire resistance while supporting the aluminum layer(s), without being too heavy for the covering.

An amount of the flame retardant chemical may be at least 2 wt.%, preferably at least 3 wt.%, more preferably at least 4 wt.%, and most preferably at least 5 wt.%, for example, in a range between 4 and 15 wt.% calculated from the total dry weight of the flame retardant support layer. Further, the amount of the flame retardant chemical may be equal to or less than 25 wt.%, preferably equal to or less than 20 wt.%, more preferably equal to or less than 17 wt.%, and most preferably equal to or less than 15 wt.%, for example, in a range between 2 and 20 wt.% calculated from the total dry weight of the flame retardant support layer. Thus, it is possible to obtain, cost-efficiently, strongly improved fire resistance for the support layer of the covering and, hence, for the whole covering.

Thus, it may be possible to obtain a covering comprising flame retardant support layer having substantially improved fire resistiveness while strongly improving strength properties of the covering.

The novel solution comprising the flame retardant support layer comprising flame retardant cellulose based fibrous material may has several technical effects. The flame retardant support layer may substantially improve adhesion between a support layer and an attachment layer. Further, the novel flame retardant support layer may have at least same mechanical properties as a non-flame retardant support layer. Still further, the flame retardant support layer may have a high hydrophobicity, hence, the covering may have a high hydrophobicity, i.e., low water absorption values. This may substantially improve usability of the covering in high humidity areas.

The flame retardant support layer, as well as the whole covering, is preferably a halogen free, i.e. it may not contain halogen(s), such as fluorine, chlorine, bromine, and iodine. These elements might release substances that are toxic to humans, and/or cause corrosion of a metal.

In an embodiment, the flame retardant chem ical of the flame retardant support layer comprises or consists of at least one of:
- proprietary nitrogen / sulfur salt,
- inorganic nitrogen / ammonium salt, and
- phosphate ester.
These chemicals may provide strongly improved fire resistance and flame extinguish properties for the support layer, particularly when used the above mentioned amounts for the flame retardant support layer.

In an embodiment, the covering comprises three flame retardant layers, and the support part is left in between the first flame retardant part and the second flame retardant part, and the second flame retardant part forms the second surface of the covering. In this embodiment, the flame retardant support layer may efficiently support the aluminum layers from external stress while improving fire resistivity of the covering.

The support part may comprise a third attachment layer, which third attachment layer can comprise at least one of:
- a layer of an extrudable polymer, preferably an extrudable flame retardant polymer, and
- a layer of a glue, preferably a flame retardant glue.

If the third attachment layer comprises the layer of a glue, the glue layer may have a specific mass of at least 0.5 g/m², preferably equal to or more than 1 g/m², more preferably equal to or more than 1.5 g/m², and most preferably equal to or more than 2 g/m². Further, the glue layer may have a specific mass of equal to or less than 15 g/m², preferably equal to or less than 10 g/m², more preferably equal to or less than 8 g/m², and most preferably equal to or less than 7 g/m². Thanks to the glue layer, the third attachment layer may be easily formed on a surface of the covering. Further, a stiffness of the product may be improved. Still further, the glue layer may form a diffusion barrier.

If the third attachment layer comprises the layer of an extrudable polymer, the extrudable polymer layer may have a specific mass of at least 7 g/m², preferably equal to or more than 10 g/m², more preferably equal to or more than 13 g/m², and most preferably equal to or more than 15 g/m². Further, the extrudable polymer layer may have a specific mass of equal to or less than 80 g/m², preferably equal to or less than 60 g/m², more preferably equal to or less than 40 g/m², and most preferably equal to or less than 30 g/m². Thanks to the extrudable polymer layer, the third attachment layer may be easily formed on a surface of the covering. Further, a stiffness of the product may be improved. Still further, the polymer layer may form a diffusion barrier.

Further, if the third attachment layer comprises a flame retardant polymer and/or flame retardant glue, fire performance of the covering may be substantially improved.

Advantageously, the covering comprises three flame retardant layers, i.e. the first flame retardant layer, the second flame retardant layer, and the flame retardant support layer, in order to highly improve the fire resistivity of the covering. Further, the covering may comprise fire retardant attachment layer(s) comprising flame retardant glue and/or flame retardant extrudable polymer in order to further improve the fire resistivity of the covering.

In an embodiment,
- the flame retardant support layer is between the first flame retardant layer and the second flame retardant layer,
- the first attachment layer is between the first flame retardant layer and the flame retardant support layer in order to attach the first flame retardant part to the support part, and
- a third attachment layer is between the second flame retardant layer and the flame retardant support layer to attach the support part to the second flame retardant part, preferably to the second flame retardant layer therein.

In this embodiment, a structure of the covering may be particularly improved so that fire resistance and internal structure of the covering may be substantially improved. Further, mechanical properties as well as installability of the covering may be highly improved. Further, the flame retardant support layer may efficiently support the aluminum layers from external stress while improving fire resistivity of the covering.

In an embodiment, the second flame retardant part is left in between the first flame retardant part and the support part, and the support part forms the second surface of the covering. This embodiment may be particularly suitable for those back panels, in which the flame retardant support layer is advantageously placed adjacent to the thermal insulation material of a back panel. In this embodiment, advantageously,
- the second flame retardant layer is between the first flame retardant layer and the flame retardant support layer,
- the first attachment layer is between the first flame retardant layer and the second flame retardant layer to attach the first flame retardant part to the second flame retardant part, and
- the second attachment layer is between the second flame retardant layer and the flame retardant support layer to attach the second flame retardant part to the support part.
Thus, the flame retardant layers may highly improve fire resistance of the covering while providing a barrier and improving mechanical properties of the covering.

In an embodiment, a second lacquer layer comprising one or more layers of lacquer may form the second surface of the covering. Thus, the lacquer may be used to protect the second surface of the covering. Alternatively, the flame retardant support layer may form the second surface of the covering. Thus, the flame retardant support layer may provide good stiffness for the covering while protecting the second surface of the covering. Alternatively, one of the attachment layers may form the second surface of the covering. Thus, an easiness of an installation process may be improved.

The above-mentioned extrudable polymer may comprise at least one of:
- polyethylene, e.g. low density polyethylene (LDPE), and/or high density polyethylene (HDPE),
- polypropylene (PP), and
- copolymer of polyethylene and polypropylene.
These polymers may be used to provide good adhesive e.g. between aluminum and a paper or board, for example between an aluminum and a kraft paper.

At least one attachment layer may comprise at least one flame retardant component. The flame retardant component(s) may be added into one or more than one attachment layer. Thus, at least one attachment layer may comprise at least one of the following flame retardant components: melamine polyphosphate, phosphorus-nitrogen compound, mineral filler, melamine cyanurate, and phosphazene. Preferably, attachment layer(s) comprise only one or only two of said flame retardant components.

If the attachment layer is the flame retardant attachment layer, many advantages may be obtained in addition to the improved fire resistance of the covering. For example, adhesion between the attachment layer and support layer may be improved. Further, adhesion between the attachment layer and aluminum layer may be improved. Still further, some barrier properties of the covering may be improved.

Advantageously, at least one attachment layer comprises or consists of the extrudable flame retardant polymer comprising the extrudable polymer and at least one flame retardant component. Thus, the extrudable flame retardant polymer may comprise the thermoplastic polymer, such as polyethylene and/or polypropylene. Further, in order to improve fire resistivity of the extrudable polymer, the extrudable flame retardant polymer may comprise one or more of said flame retardant components.

As discussed, the flame retardant component may comprise or consist of melamine polyphosphate(s), phosphorus-nitrogen compound(s), mineral filler(s), melamine cyanurate(s), and/or phosphazene(s). The total amount of said flame retardant components may be at least 5 wt.%, preferably equal to or more than 8 wt.%, more preferably equal to or more than 10 wt.%, and most preferably equal to or more than 13 wt.%, calculated from total dry weight of the attachment layer. Further, in order to obtain good adhesiveness, the extrudable flame retardant polymer may comprise said one or more of the flame retardant components so that the total amount of said components is equal to or less than 60 wt.%, preferably equal to or less than 50 wt.%, more preferably equal to or less than 40 wt.%, and most preferably equal to or less than 30 wt.%, calculated from total dry weight of the attachment layer. The at least one flame retardant component may be added into the attachment layer e.g. by using a coating or a lamination method.

Thus,
- the first attachment layer, and/or
- the second attachment layer, and/or
- the third attachment layer
may comprise at least flame retardant component.

Thus, at least one attachment layer may comprise an extrudable (thermoplastic) polymer, e.g. polyethylene and/or polypropylene, the total amount of said extrudable polymers being at least 40 wt.%, preferably at least 50 wt.%, and more preferably at least 60 wt.%, and most preferably at least 70 wt.%, calculated from the total dry weight of the attachment layer.

The covering may be used to form a back panel of a refrigerator together with thermal insulating material. Thus, a back panel for a refrigerator may comprise
- thermal insulating material, e.g. polyurethane, and
- the covering.

Thanks to the novel solution, many advantages may be obtained. For example, it is possible to obtain a novel covering for a refrigerator having highly improved flame resistance properties. Thus, the novel covering may improve a fire resistivity level of a refrigerator. Further, it is possible to manufacture the novel covering in a cost-effective manner. Further, the covering may be applied directly onto the thermal insulation material. Thus, time and space can be saved.

The covering may be arranged to protect the thermal insulating material at least from fire.

Humidity may degrade adhesion of the covering. Further, gas from thermal insulating material may degrade adhesion of the covering. Thus, the covering may further be arranged to protect the thermal insulating material from humidity and/or diffusion of gas.

The covering may have a printing layer for improved visuality. The covering may have at least one lacquer layer for preventing oxidization of aluminum. Top side of aluminum may be used for improving emissivity, fire performance, diffusion barrier and stiffness. Further, other side of aluminum may improve fire performance, diffusion barrier and stiffness. The covering may have a polymer layer or a glue for providing good adhesive level between covering's layers or between the covering and a thermal insulation material of a panel.

### Brief description of the drawings

In the following, the invention will be described in more detail with reference to the appended drawings, in which:
- Fig. 1a: shows, as a side view, an example of a thermal insulation material and a covering,
- Figs 1b-c: show, as a side view, example structures of a covering,
- Fig. 1d: shows, as a side view, an example of a second flame retardant part of a covering,
- Fig. 1e: shows, as a side view, an example of a support part of a covering,
- Fig. 1f: shows, as a side view, an example of a first flame retardant part of a covering, and

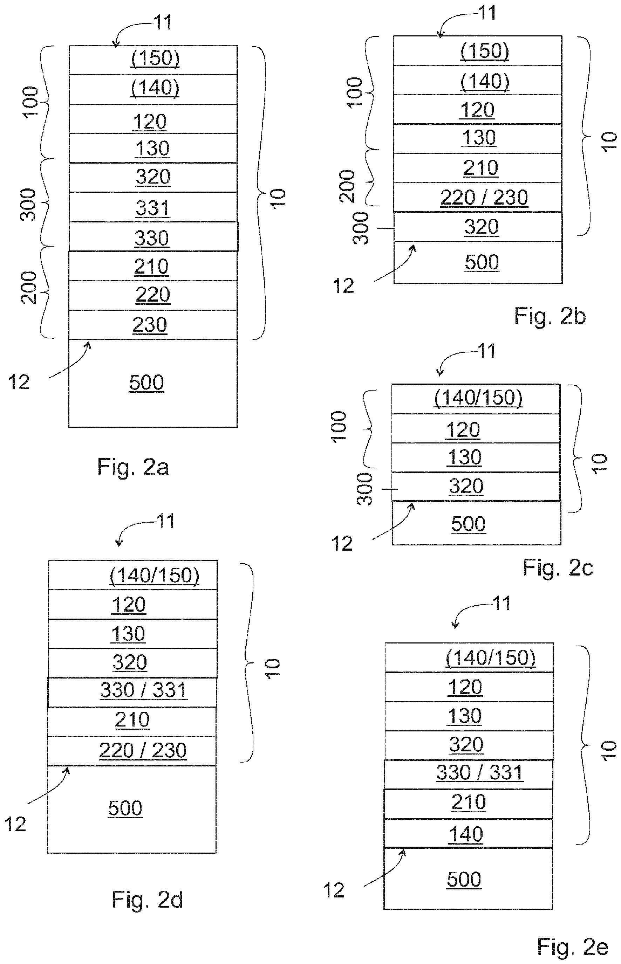

- Figs 2a-e: show, as a side view, example structures of a covering.

The figures are schematic and are intended to illustrate the general principles of the disclosed solution. Therefore, the illustrations in the Figures are not necessarily in scale or suggestive of precise layout of system components.

### Detailed description

The solution is described in the following in more detail with reference to some embodiments, which shall not be regarded as limiting.

In this specification, references are made to Figures, in which the following reference numerals and denotations are used:
- 10: covering
- 11: first surface of the covering (outer surface of the covering),
- 12: second surface of the covering (inner surface of the covering),
- 100: first flame retardant part,
- 120: first flame retardant layer,
- 130: first attachment layer,
- 140: lacquer layer,
- 150: printing,
- 200: second flame retardant part,
- 210: second flame retardant layer,
- 220, 230: second attachment layer,
- 220: layer of a glue,
- 230: layer of an extrudable polymer,
- 300: support part,
- 320: flame retardant support layer,
- 330, 331: third attachment layer,
- 330: layer of an extrudable polymer,
- 331: layer of a glue,
- 500: thermal insulation foam,
- t10: thickness of the covering,
- t100: thickness of the first flame retardant part,
- t200: thickness of the second flame retardant part,
- t300: thickness of the support part,
- t120: thickness of the first flame retardant layer,
- t210: thickness of the second flame retardant layer,
- t310: thickness of the flame retardant support layer,
- t130: thickness of an attachment layer, and
- t140: thickness of the lacquer layer.

In this specification term "comprising" may be used as an open term, but it also comprises the closed term "consisting of".

Percentage values relating to an amount of a material are percentages by weight (wt.%) unless otherwise indicated. All percentage values refer to dry weight unless otherwise indicated.

Term "web" refers to a continuous material. Webs may be stored and/or transported as rolls. The covering can be a web which stored and/or transported as a roll.

Thus, the covering is preferably rollable. Thus, the covering can be arranged to be rollable. Thus, the covering may be stored and/or transported as a roll. The covering can be arranged to be used as a covering of a back panel of a refrigerator. Thus, if the covering is transported as a roll, it may be needed to be cut to a preferred length before a usage in order to be attached to a refrigerator.

Throughout this description, the term "specific mass" refers to the mass of a material layer as divided by the area of the layer (g/m²).

In this description, a fibre refers to a cellulose based piece of material having a length, a width, and a thickness. The length may be at least ten times the width, and the length may be at least ten times the thickness.

In this application, term "fibrous material" refers to material that comprises cellulose based fibres. The fibrous material is preferably a flame retardant paper or a flame retardant board.

A back panel of a refrigerator may comprise a thermally insulating material 500 and a covering 10. Such a covering 10 can be designed for use as a covering 10 of a back panel of a refrigerator, the back panel comprising the covering and a thermally insulating material 500.

The covering 10 may be sold as such, preferably in a form of a roll.

### Insulation Foam

The thermally insulating material 500 may comprise thermal insulation foam. The thermally insulating material may comprise any suitable thermally insulating material, e.g. polyurethane in rigid foam form. The properties of thermally insulating materials, such as the polyurethane, depend on many things. The thermally insulating material may comprise e.g. a blowing agent and one or more additives selected from a group of a catalyst, a nucleating agent, a surfactant, a crosslinker, a chain extender, a filler, a colorant, a pigment, an antistatic agent, reinforcing fibers, an antioxidant, a preservative, an infrared blocking agent, and an acid scavenger. Such additives are used to improve e.g. thermal resistance, acoustic properties, rigidity, and/or moisture resistance of rigid foam insulation panels.

In an embodiment, in use, the covering 10 is attached to a thermally insulating material 500m which may comprise polyurethane (PU), such as rigid polyurethane (PUR) or polyisocyanurate (PIR). When so used, an inner surface 12 of the covering 10 can adhere to the thermally insulating material 500. In an embodiment, at least a surface of the thermally insulating material 500 may consists of polyurethane. This may ensure good adhesion, since polyurethane surface may be easily joined with the inner surface 12 of the covering 10.

### Covering

The covering 10 can comprise the first surface 11 and the second surface 12. The second surface 12 can be the inner surface of the covering, and the first surface 11 can be the outer surface of the covering.

The first surface 11 of the covering 10 can have a normal that is parallel to the thickness of the covering 10. Further, the second surface 12 of the covering 10 can have a normal that is parallel to the thickness of the covering 10.

The second surface 12 can be attachable to a thermal insulation material 500. The inner surface 12 of the covering 10 may comprise such a material to which thermal insulation material, such as polyurethane, adheres well.

To improve a fire resistivity of the covering 10, the covering 10 may comprise at least two flame retardant parts, i.e., a first flame retardant part 100, and a flame resistant support part 300.

Each flame retardant part 100, 300 comprises at least one flame retardant layer 120, 320. The flame retardant layer may be an aluminum layer, or a flame retardant paper or board.

The covering comprises one or more than one aluminum layer. The covering further comprises one or more than one flame retardant cellulose based fibrous material layer. The flame retardant cellulose based fibrous material layer may comprise paper and/or board that is impregnated and/or coated with a flame retardant chemical(s).

The covering 10 may further comprise at least one attachment layer 130, 220, 230, 330, 331. Thus, it is possible to attach each flame retardant part 100, 200, 300 to at least one other surface. Each attachment layer may comprise a glue layer and/or an extrudable polymer layer. One or more than one attachment layer may comprise a flame retardant glue layer and/or flame retardant extrudable polymer layer. Thus, the fire resistivity of the covering may be highly improved.

At least one attachment layer may comprise a glue layer. The glue layer of the covering may comprise e.g. water based adhesive(s) or a 2-component adhesive.

At least one attachment layer may comprise an extrudable (thermoplastic) polymer, e.g. polyethylene and/or polypropylene, the total amount of said extrudable polymers being at least 40 wt.%, preferably at least 50 wt.%, and more preferably at least 60 wt.%, and most preferably at least 70 wt.%, calculated from the total dry weight of the attachment layer.

Further, at least one attachment layer may comprise an extrudable flame retardant polymer, which may comprise, for example,
- polyethylene and/or
- polypropylene,
and at least one of the following flame retardant components:
- melamine polyphosphate, and
- phosphorus-nitrogen compound(s),
- mineral filler(s), such as talc, clay, ground calcium carbonate, precipitated calcium carbonate, calcium sulphate, and titanium dioxide, preferably calcium carbonate or talc,
- Melamine Cyanurate, and
- Phosphazene.

Said at least one attachment layer may comprise the at least one flame retardant component so that the total amount of the flame retardant components is at least 5 wt.%, preferably equal to or more than 8 wt.%, more preferably equal to or more than 10 wt.%, and most preferably equal to or more than 13 wt.%, calculated from total dry weight of the attachment layer. Further, in order to obtain good adhesiveness, the at least one attachment layer may comprise said one or more than one flame retardant component so that the total amount of said flame retardant components is equal to or less than 60 wt.%, preferably equal to or less than 50 wt.%, more preferably equal to or less than 40 wt.%, and most preferably equal to or less than 30 wt.%, calculated from total dry weight of the attachment layer. The at least one flame retardant component may be added into the attachment layer e.g. by using a coating or a lamination method. For example, with melamine polyphosphate(s) and/or phosphorus-nitrogen compound(s) an extrusion method may also be usable.

A second flame retardant part 200 comprising at least one flame retardant layer is an optional feature but, in order to further improve the fire resistance of the covering, the covering preferably comprises said second flame retardant part 200. Thus, most advantageously, the covering comprises at least three flame retardant layers, which are arranged to improve the fire resistance properties of the covering.

### First flame retardant part

The covering 10 comprises a first flame retardant part 100, which can be a face part of the covering. The first flame retardant part 100 can form a first surface 11 of the covering. Thus, the first flame retardant part 100 may be configured to form an outer surface for the covering. The outer surface may comprise e.g. printing and/or lacquer.

A main purpose of the first flame retardant part 100 can be to protect the thermal insulating material 500 from fire. Correspondingly, the first flame retardant part 100 can be configured to protect the thermal insulating material 500 from at least fire. Further, the first flame retardant part may protect the flame retardant support part 300 and/or the thermally insulating material 500 from humidity. Thus, the first flame retardant part 100 may be configured to protect the thermal insulating material 500 and/or the flame retardant support part 300 from humidity.

In an embodiment, the first flame retardant part 100 may be used to engineer also other properties of the covering. The first flame retardant part 100 may e.g. reflect radiative heat (i.e. electromagnetic radiation e.g. at least in the infrared region). The first flame retardant part 100 may e.g. be resistant to certain chemicals, such as alkaline liquids. However, the main purpose of the first flame retardant part can be to protect the thermally insulating material 500 from fire.

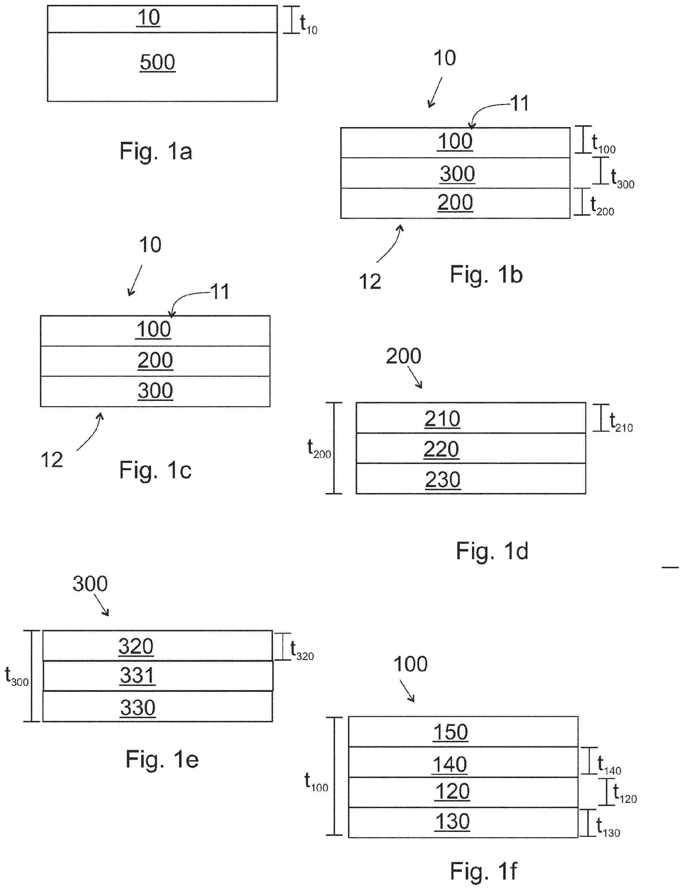

Referring to Fig. 1f, the covering 10 can comprise the first flame retardant part 100. The first flame retardant part comprises a first flame retardant layer 120 in order to improve fire resistance of the covering. The first flame retardant layer 120 can be an aluminum layer. Thus, the first flame retardant layer 120 is preferably made of aluminum. Aluminum is beneficial for its low gas diffusivity, fire resistivity, and light weight. Thus, aluminum may not increase weight of the covering too much while improving fire resistance of the covering.

Thus, the first flame retardant layer 120 is an aluminum layer having a thickness t120 in a range between 5 µm and 50 µm. The thickness of the aluminum layer may be at least 5 µm, preferably at least 7 µm, more preferably at least 9 µm, and most preferably at least 11 µm in order to improve the fire resistance of the covering. Further, the thickness of the first flame retardant layer may be equal to or less than 50 µm, preferably equal to or less than 40 µm, more preferably equal to or less than 30 µm, and most preferably equal to or less than 25 µm to decrease costs of the covering.

In an embodiment, the first flame retardant part 100 consists of
- first flame retardant layer 120,
- optionally, lacquer layer 140 on the first flame retardant layer,
- first attachment layer 130, and
- optionally, a printing 150 on the lacquer layer.

The first flame retardant part 100 can have a first lacquer layer 140 on the first flame retardant layer 120. The lacquer of the lacquer layer 140 may be water based or solvent based. The term "solvent" refers to solvents other than water. The lacquer layer can be used to prevent oxidizing of aluminum.

The covering may be printed or unprinted. Thus, the covering may comprise a printing layer 150, preferably on the first lacquer layer 140. A printing 150 may at least partly cover the lacquer layer 140 in order to improve visual appearance and/or to provide information related to the covering to a user. Lacquer 140 and printing 150 are illustrated e.g. in Fig. 1f.

The lacquer layer 140 may form the second surface 11 of the covering 10, or only a part of the first surface. The printing 150 may form the first surface 11 or only a part of the first surface 11 of the covering 10.

Thus, the first flame retardant layer 120 may be at least partly covered by lacquer 140 and/or printing 150. A lacquer layer 140 may fully cover the first flame retardant layer 120 in order to improve visual appearance and/or to protect the first flame retardant layer 120 and/or the support part 300.

The first flame retardant part 100 may further comprise a first attachment layer 130 to attach the first flame retardant part to another part of the covering.

The first attachment layer 130 can comprise an extrudable polymer, preferably a flame retardant extrudable polymer. The flame retardant extrudable polymer may further improve the fire resistivity of the covering. A specific mass of the extrudable polymer, such as flame retardant extrudable polymer, can be in a range between 7 g/m² and 80 g/m², preferably in a range between 15 g/m² and 30 g/m².

Alternatively, or in addition, the first attachment layer 130 can comprises a glue, preferably a flame retardant glue. The flame retardant glue may further improve the fire resistivity of the covering. In this embodiment, a specific mass of the glue layer, such as a flame retardant glue layer, is preferably in a range between 1 g/m² and 15 g/m², more preferably in a range between 2 g/m² and 7g/m².

Thus, the first attachment layer 130 may be a glue layer. In this embodiment, the first attachment layer may comprise e.g. water based adhesive(s) or a 2-component adhesive.

The extrudable polymer can comprise at least one of
- polyethylene,
   - low density polyethylene (LDPE),
   - high density polyethylene (HDPE), and
- polypropylene (PP).

The extrudable flame retardant polymer preferably may comprise at least one of the following flame retardant components:
- Melamine Polyphosphate, and
- phosphorus-nitrogen compounds
- mineral filler(s), such as talc, clay, ground calcium carbonate, precipitated calcium carbonate, calcium sulphate, and titanium dioxide, preferably calcium carbonate or talc,
- Melamine Cyanurate, and
- Phosphazene.
These components may be used to highly improve flame retardant properties of the covering together with other flame retardant layers.

In an embodiment, at least one of the attachment layers, for example the first attachment layer 130, comprises both, the extrudable polymer layer and the glue layer. Thus, emissivity, fire performance, diffusion barrier and stiffness may be improved.

The first flame retardant part 100 may comprise the lacquer layer 140 on the first flame retardant layer 120. In this embodiment, the first flame retardant layer 120 is preferably left in between
- the lacquer layer 140, and
- the first attachment layer 130.
Thus, the lacquer layer may protect the first flame retardant layer while the first attachment layer may be used to attach the first flame retardant part to another internal part of the covering.

In an embodiment, the first attachment layer 130 forms an interface with the first flame retardant layer 120. In such a case, no other layer is left in between the first attachment layer 130 and the first flame retardant layer 120. This may improve the internal structure of the covering.

Thanks to the novel solution, the first flame retardant part 100 forming an outer surface 11 of the covering 10 may highly improve properties of the covering..

### Second flame retardant part

The second flame retardant part 200 is a preferred but optional feature of the covering. The second flame retardant part can be configured to improve e.g. fire resistance of the covering.

The second flame retardant part 200 can be configured to protect the thermally insulating material 500 from at least fire. The second flame retardant part 200 might further prevent diffusion of gas from the thermally insulating material 500.

Figure 1d shows an embodiment of the second flame retardant part 200. The second flame retardant part may comprise a second flame retardant layer 210. The second flame retardant layer 210 is an aluminum layer having a thickness t210 in a range between 5 µm and 50 µm. The main purposes of the second flame retardant layer 210 may be to further improve fire resistance and diffusion barrier of the covering, as well as increase stiffness of the covering.

The second flame retardant layer 210 can have a thickness of equal to or more than 5 µm, preferably equal to or more than 7 µm, and most preferably equal to or more than 11 µm Further, the second flame retardant layer 210 can have a thickness of equal to or less than 50 µm, preferably equal to or less than 30 µm, and most preferably equal to or less than 25 µm. The lower limit can be sufficient for obtaining the improved fire resistivity for the covering 10. The upper limit may ensure that the specific mass of the covering 10 remains sufficiently low. This may be beneficial for the point of view of handling the covering 10 or the panel 500. Moreover, stiffness of the covering may be increased, further improving handling of the covering. Further, from the point of view of costs involved, the thickness should not be too great.

The second flame retardant part 200 can further comprise a second attachment layer 220, 230. The second attachment layer can comprise one or more than one layer. Preferably, the second attachment layer has only one layer or only two layers. This may improve an easiness of the manufacturing process and reduce costs of the covering.

The second attachment layer 220, 230 can comprise a layer of an extrudable polymer, preferably an extrudable flame retardant polymer. In this embodiment, a specific mass of said polymer can be in a range between 7 g/m² and 80 g/m², preferably in a range between 15 g/m² and 30 g/m². Thus, adhesiveness may be improved for layers attached by the second attachment layer, particularly in a case of aluminum layer(s) and/or the cellulose based fibrous layer. Further, fire resistance may be improved.

Alternatively or in addition, the second attachment layer 220, 230 can comprise a layer of a glue, preferably a flame retardant glue. In this embodiment, a specific mass of the glue layer, such as the flame retardant glue, is preferably in equal to or more than 0.5 g/m², more preferably equal to or more than 2 g/m². This has been found to be sufficiently thick in view of adhesion. Further, the specific mass of the glue layer can be equal to or less than 15 g/m², more preferably equal to or less than 7 g/m². This helps to keep the mass of the covering 10 and the panel 500 reasonably low.

Thus, the second attachment layer 220, 230 may comprise at least one of:
- polyethylene, such as low density polyethylene (LDPE), and/or high density polyethylene (HDPE),
- polypropylene (PP),
- copolymer of polyethylene and polypropylene

In an embodiment, the extrudable polymer is a copolymer comprising polyethylene PE and polypropylene PP, preferably a copolymer of polypropylene PP and low density polyethylene LDPE.

Polyethylene may be beneficial, since polyethylene can be easily manufactured. Here, the term polyethylene layer refers to a layer comprising polyethylene, e.g. comprising at least one of low-density polyethylene (LDPE), linear low-density polyethylene (LLDPE), and high-density polyethylene (HDPE).

The second attachment layer may further comprise at least one flame retardant component, preferably comprising at least one of:
- Melamine Polyphosphate(s),
- phosphorus-nitrogen compound(s),
- mineral filler(s), such as talc, clay, ground calcium carbonate, precipitated calcium carbonate, calcium sulphate, and titanium dioxide, preferably calcium carbonate or talc,
- Melamine Cyanurate(s), and
- Phosphazene(s).

These flame retardant components may be particularly advantageous for improving the fire resistivity of the covering. From said components, melamine polyphosphate, and phosphorus-nitrogen compounds may be the most beneficials since they may highly improve fire resistance of the covering 10.

If the second attachment layer 220, 230 comprises two layers, the first layer 230 may comprise the extrudable polymer layer and the second layer 220 may be a glue layer. In this embodiment, a purpose of the glue layer 220 can be to adhere the second flame retardant layer 210 to the extrudable polymer layer 230 and, hence, to improve the attachability of the second attachment layer 220, 230. This may be particularly advantageous to attach aluminum to a flame retardant support layer, e.g. to a flame retardant paper or board.

If the second attachment layer 220, 230 comprises the extrudable fire retardant polymer layer, the second attachment layer 220, 230 may further improve the fire resistivity of the covering 10. Further, if the glue layer is the fire retardant glue layer, the second attachment layer 220, 230 may further improve the fire resistivity of the covering 10. In this case, the glue 220 can be left in between the second flame retardant layer 210 and the polymer layer 230 of the second attachment layer. Thus, in an embodiment, the second flame retardant part 200 comprises a glue layer 220, which is left in between the second flame retardant layer 210 and the extrudable polymer layer 230.

The second flame retardant part 200 can be the innermost part of the covering, to be arranged in use in between the flame retardant support part 300 and the thermally insulating material 500. Thus, the second attachment layer 220, 230 may be between the second flame retardant layer 210 and the second surface 12 of the covering.

The second attachment layer 220, 230 may form the second surface 12 of the covering 10.

In an embodiment, the second attachment layer 220, 230 forms an interface with the second flame retardant layer 210. In such a case, no other layer is left in between the second attachment layer 220, 230 and the second flame retardant layer 210.

Thus, the second flame retardant part 200 may comprise the second flame retardant layer 210 and the second attachment layer 220, 230, which second attachment layer may be comprise a first layer and a second layer. The second flame retardant layer 210 may be left in between the second surface 12 and the support part 300. The glue layer 220 may be used to adhere the extrudable polymer layer 230 to the second flame retardant layer 210.

Thus, in an embodiment, the second flame retardant part 200 consists of:
- second attachment layer 220, 230, and
- the second flame retardant layer 210.

The second flame retardant part may improve fire resistance properties of the covering 10. Further, the second flame retardant part may be used to attach the covering 10 to a thermal insulation material. Thus, the second attachment layer 230 may be arranged to join the second flame retardant layer 210 to a thermally insulating material 500. Thus, a purpose of the second attachment layer 220, 230 can be to adhere the second flame retardant layer 210 to the thermally insulating material 500. Since polyethylene attaches well e.g. to polyurethane, a surface of the second attachment layer 220, 230 (in this case the inner surface 12 of the covering) can be made of polyethylene.

If the second flame retardant part forms the inner surface 12 of the covering, the second flame retardant part 200 may keep fire away from the thermal insulation foam in a case if the first flame retardant part and the support part cannot prevent the fire to go through said parts 300, 100.

### Flame retardant support part

The covering comprises a flame retardant support part 300. The flame retardant support part has two main purposes. The main purpose of the support part 300 is to improve fire resistance of the covering 10. Further other main purposes of the flame retardant support part 300 is to improve internal structure of the covering and to support the aluminum layer(s) from external stress. Thus, advantageously, the support part 300 is adjacent to the first flame retardant part and/or the second flame retardant part. Most advantageously, the support part may be left in between the second flame retardant part 200 and the first flame retardant part 100.

The flame retardant support part 300 comprises a flame retardant support layer 320. The main purposes of the flame retardant support layer 320 are to improve the fire resistivity of the covering, improve internal structure of the covering, as well as support other flame retardant layer(s), in particular from external stress. In an embodiment, the flame retardant support layer 320 is left in between the second flame retardant layer 210 and the first flame retardant layer 120.

The flame retardant support layer 320 comprises cellulose based fibrous material. Cellulose based fibrous materials may provide excellent mechanical strength without being heavy. Advantageously, the flame retardant support layer comprises paper and/or board, most advantageously a flame retardant paper and/or a board. Thus, fire resistivity of the covering may be highly improved.

The flame retardant support layer may be a paper or board coated and/or impregnated with a fire retardant chemical(s) in order to improve fire resistance of the flame retardant support layer 320.

The flame retardant support layer 320 preferably comprise chemical pulp in order to obtain high elasticity and high tear resistance. Improved strength and durability may be highly advantageous properties of the flame retardant support layer. In an advantageous embodiment, the flame retardant support layer comprises Flame Retardant Kraft paper, i.e., a Kraft paper impregnated with a flame retardant chemical.

The flame retardant support layer 320 can have a specific mass of from 100 g/m² to 800 g/m². The flame retardant support layer may have a specific mass of at least 100 g/m², preferably equal to or more than 140 g/m², more preferably equal to or more than 170 g/m², and most preferably equal to or more than 200 g/m². Further, the flame retardant support layer may have a specific mass of equal to or less than 800 g/m², preferably equal to or less than 600 g/m², more preferably equal to or less than 400 g/m², and most preferably equal to or less than 300 g/m². The aforementioned specific mass in connection with the flame retardant fibrous material can provide good mechanical support and resistivity to fire without too much weight increase.

A total amount of the flame retardant chemical(s) on the flame retardant support layer 320 can be in a range between 5 and 20 wt.% calculated from the total dry weight of the flame retardant support layer 320. The amount of the flame retardant chemical may be at least 2 wt.%, preferably at least 3 wt.%, more preferably at least 4 wt.%, and most preferably at least 5 wt.%, for example, in a range between 4 and 15 wt.% calculated from the total dry weight of the flame retardant support layer. Further, the amount of the flame retardant chemical may be equal to or less than 25 wt.%, preferably equal to or less than 20 wt.%, more preferably equal to or less than 17 wt.%, and most preferably equal to or less than 15 wt.%, for example, in a range between 2 and 20 wt.% calculated from the total dry weight of the flame retardant support layer. Thus, it is possible to obtain, cost-efficiently, strongly improved fire resistance for the support layer of the covering and, hence, for the whole covering.

Said proportion of the flame retardant chemical may provide cost efficiently sufficient resistivity to fire.

The flame retardant chemical may comprise or consist of at least one of the following:
- proprietary nitrogen / sulfur salt,
- Inorganic nitrogen / ammonium salt, and
- phosphate ester.

In order to support the first flame retardant layer 120, the flame retardant support layer 320 can be attached to the first flame retardant layer 120 with the first attachment layer 130.

The support part 300 may comprise a third attachment layer 330, 331. The third attachment layer may comprise one or more than one attachment layers.

The third attachment layer 330, 331 may comprise an extrudable polymer, preferably an extrudable flame retardant polymer. A specific mass of the extrudable polymer can be in a range between 7 g/m² and 80 g/m², preferably in a range between 15 g/m² and 30 g/m². Thanks to the extrudable polymer layer, the third attachment layer may be easily formed on a surface of the covering. Further, a stiffness of the product may be improved. Still further, the polymer layer may form a diffusion barrier.

The extrudable polymer can comprise at least one of
- polyethylene, such as a low density polyethylene (LDPE), and/or high density polyethylene (HDPE),
- polypropylene (PP), and
- copolymer of polypropylene (PP) and polyethylene (PE).

Polyethylene PE may comprise high-density polyethylene (HDPE), linear low-density polyethylene (LLDPE), and/or low-density polyethylene (LDPE). Polyethylene is beneficial, since polyethylene can be easily manufactured.

The third attachment layer may comprise at least one flame retardant component, preferably selected from the following group:
- Melamine Polyphosphate(s),
- phosphorus-nitrogen compound(s),
- mineral filler(s), such as talc, clay, ground calcium carbonate, precipitated calcium carbonate, calcium sulphate, and titanium dioxide, preferably calcium carbonate or talc,
- Melamine Cyanurate(s), and
- Phosphazene(s).
These components may be particularly advantageous for improving the fire resistivity of the covering. From said components, melamine polyphosphate, and phosphorus-nitrogen compounds may be the most beneficials since they may highly improve fire resistance of the covering 10.

Alternatively or in addition, the third attachment layer 330, 331 may comprise a glue layer, preferably a flame retardant glue layer. A specific mass of the glue layer, e.g. the flame retardant glue layer, may be in a range between 0.5 g/m² and 15 g/m², preferably in a range between 2 g/m² and 7 g/m². Thanks to the glue layer, the third attachment layer may be easily formed on a surface of the covering. Further, a stiffness of the product may be improved. Still further, the glue layer may help to form a diffusion barrier.

In an embodiment, the support part 300 can be attached to the second flame retardant layer 210 with the third attachment layer 330, 331. The third attachment layer 330, 331 may comprise
- extrudable polymer material layer, most preferably extrudable flame retardant polymer, and/or
- glue layer, most preferably flame retardant glue layer.

Thanks to the novel solution, the support part 300 may be used to mechanically support the multilayer structure of the covering while improving fire resistance properties of the covering 10.

### Example structures of the covering

The properties of the covering, such as the fire resistance level of the covering, depend on the layers of the multilayer structure. Multilayer structure comprising fire retardant layers, particularly first fire retardant layer together with flame retardant support layer, as well as attachment layers can highly improve fire resistance of the covering.

The covering can comprise at least one aluminum layer, preferably two aluminum layers. Preferably, total specific volume of the aluminum in the covering is in a range between 17 and 270 g/m². Further, total specific volume of the aluminum in the covering may be equal to or less than 270 g/m², preferably equal to or less than 210 g/m², more preferably equal to or less than 150 g/m², and most preferably equal to or less than 110 g/m². Thus, fire performance as well as diffusion barrier, stiffness and handling of the covering may be substantially improved.

The covering can comprise at least one layer of flame retardant paper and/or flame retardant board. Preferably, total specific volume of the paper(s) and board(s) in the covering is in a range between 100 g/m² and 800 g/m², more preferably in a range between 200 g/m² and 500 g/m².

The covering may comprise at least two attachment layers. Preferably, the attachment layers consist of extrudable polymer(s) and glue(s). In an embodiment, the covering comprises only 1 to 3 attachment layers.

The support part 300 is preferably left in between the first flame retardant part 100 and the second flame retardant part 200 so that the second flame retardant part 200 forms the second surface of the covering.

Therefore, flame retardant support layer 320 is preferably left in between the first flame retardant layer 120 and the second flame retardant layer 210. In this embodiment, the flame retardant support layer 320 may efficiently support the first flame retardant layer and the second flame retardant layer.

In this embodiment, the first attachment layer 130 may be left in between the first flame retardant layer 120 and the flame retardant support layer 320. Further, the third attachment layer 330, 331 may be left in between the second flame retardant layer 210 and the flame retardant support layer 320 to attach the support part 300 to the second flame retardant part 200, preferably to the second flame retardant layer 210 therein.

Alternatively, the second flame retardant part 200 can be between the first flame retardant part 100 and the support part 300. In this embodiment, the support part 300 forms the second surface 12 of the covering. In this embodiment, the second flame retardant layer 210 can be left in between the first flame retardant layer 120 and the flame retardant support layer 320. Further, the first attachment layer 130 can be left in between the first flame retardant layer 120 and the second flame retardant layer 210, and the second attachment layer 220, 230 can be left in between the second flame retardant layer 210 and the flame retardant support layer 320.

### First surface of the covering

A lacquer 140 can form the first surface 11 or at least part of the first surface 11 of the covering. Alternatively or in addition, printing 150 can form the first surface 11 or at least part of the first surface 11 of the covering. Alternatively, the first flame retardant layer may form the first surface 11 or at least part of the first surface 11.

### Second surface of the covering

A lacquer 140 can form the second surface or at least part of the second surface 12 of the covering. Thus, it is possible to prevent aluminum from oxidizing. Alternatively, the flame retardant support layer 320 may form the second surface 12 of the covering. This may substantially improve fire performance of the covering as well as improve mechanical properties of the covering. Alternatively, the second attachment layer 220, 230 can form the second surface 12 of the covering, or at least part of the second surface 12. This may improve diffusion barrier and increase stiffness, as well as improve fire performance.

Advantageously, the second surface 12 of the covering comprises or consists of polyethylene. Thus, the covering may be easily attached to thermal insulation material of a back panel.

### Manufacturing process of the covering

As an example, the covering may be manufactured by
- providing a first flame retardant part,
- optionally, providing a second flame retardant part,
- providing a flame retardant support part, and
- attaching the support part to at least one of the flame retardant parts.

The second flame retardant part 200 may be formed as a laminate that is attached to the flame retardant support part 300 e.g. by using an attachment layer of the second flame retardant part and/or the flame retardant support part.

Further, the first flame retardant part 100 may be formed as a laminate that is attached to the support part 300 e.g. by using the first attachment layer.

In an embodiment, the attachment layer 130 of the first flame retardant part 100 may be extruded or coextruded onto the flame retardant support layer 320.

The second flame retardant part 200 may comprise the second attachment layer 230, which may be used for bonding the thermally insulating material 500 to the covering. In an embodiment, at least one thermoplastic layer is extruded or coextruded directly onto the second flame retardant layer 210 in order to form the second attachment layer.

At least one attachment layer of the support part 300 may be extruded or coextruded onto the second flame retardant layer 210.

Thus, the attachment layers, or at least one attachment layer, may have been made by extruding one or more layers. Alternatively, or in addition, at least some of the attachment layers may have been casted. Extrusion typically results in mono or multilayer films free from holes or other perforations. Moreover, extrusion or casting can result in mono or multilayer films free from fibres. In other words, extrusion can result in non-fibrous mono or multilayer films free from perforations or holes.

As another example, the parts or at least some layers may be attached by using glue.

Alternatively, or in addition, layers of the covering may be attached to each other using methods known by a skilled person. Further, application of Lacquer 140 and/or printing 150 may be done using methods known by a skilled person.

The invention is not limited solely to the examples presented in Figures and the above description, but it may be modified within the scope of the appended claims.

## Claims

1. A covering (10) for a back panel of a refrigerator, the covering comprising:
- a first flame retardant part (100) forming a first surface (11) of the covering, the first flame retardant part comprising
- a first flame retardant layer (120), which is an aluminum layer having a thickness (t120) in a range between 5 µm and 50 µm, preferably in a range between 9 µm and 30 µm,
- optionally, a first lacquer layer (140) on the first flame retardant layer (120),
- a first attachment layer (130) comprising at least one of the following layers:
- a layer of an extrudable polymer having a specific mass in a range between 7 g/m² and 80 g/m², and
- a layer of glue having a specific mass in a range between 0.5 g/m² and 15 g/m²,
- optionally, a second flame retardant part (200) comprising a second flame retardant layer (210), which second flame-retardant layer (210) is an aluminum layer, and
- a flame retardant support part (300) comprising a flame retardant support layer (320), the flame retardant support layer (320) having a specific mass in a range between 100 g/m² and 800 g/m², wherein the flame retardant support layer (320) comprises:
- cellulose based fibrous material, such as a paper or a board, and
- a flame retardant chemical, which flame retardant chemical is preferably coated on and/or impregnated into the cellulose based fibrous material.

2. The covering according to claim 1, wherein the covering comprises the second flame retardant part (200), and
- the second flame retardant layer (210) has a thickness (t210) in a range between 5 µm and 50 µm, preferably from 9 µm to 30 µm.

3. The covering according to claim 2, wherein the second flame retardant part (200) further comprises a second attachment layer (220, 230), the second attachment layer (220, 230) comprising one or two of:
- a layer of extrudable polymer having a specific mass in a range between 7 g/m² and 80 g/m², and
- a layer of glue having a specific mass in a range between 0.5 g/m² and 15 g/m².

4. The covering according to claim 3, wherein
- the second attachment layer (220, 230) is left in between the second flame retardant layer (210) and a second surface (12) of the covering, and/or
- the second attachment layer (220, 230) is forming the second surface (12) of the covering.

5. The covering according to any of the preceding claim 2 to 4, wherein
- the support part (300) is between the first flame retardant part (100) and the second flame retardant part (200).

6. The covering according to claim 5, wherein
- the flame retardant support layer (320) is between the first flame retardant layer (120) and the second flame retardant layer (210),
- the first attachment layer (130) is between the first flame retardant layer (120) and the flame retardant support layer (320) to attach the first flame retardant part to the third flame retardant part, and
- a third attachment layer (330, 331) is between the second flame retardant layer (210) and the flame retardant support layer (320) to attach the support part (300) to the second flame retardant part (200), preferably to the second flame retardant layer (210) therein.

7. The covering according to any of the preceding claim 2 to 4, wherein
- the second flame retardant part (200) is between the first flame retardant part (100) and the support part (300).

8. The covering according to claim 7, wherein
- the second flame retardant layer (210) is between the first flame retardant layer (120) and the flame retardant support layer (320),
- the first attachment layer (130) is between the first flame retardant layer (120) and the second flame retardant layer (210) in order to attach the first flame retardant part to the second flame retardant part, and
- a/the second attachment layer (220, 230) is between the second flame retardant layer (210) and the flame retardant support layer (320) to attach the second flame retardant part to the third flame retardant part.

9. The covering according to any of the preceding claims, wherein the support part (300) comprises a/the third attachment layer (330, 331), which third attachment layer comprises at least one of:
- a layer of extrudable polymer having a specific mass in a range between 7 g/m² and 80 g/m², and
- a layer of a glue having a specific mass in a range between 0.5 g/m² and 15 g/m².

10. The covering according to any of the preceding claims, wherein
- a layer of lacquer, or
- the flame retardant support layer (320), or
- a/the second attachment layer, or
- a/the third attachment layer
forms the second surface (12) of the covering.

11. The covering according to any of the preceding claims, wherein the extrudable polymer comprises at least one of
- polyethylene, such as low density polyethylene (LDPE), or high density polyethylene (HDPE), and
- polypropylene (PP).

12. The covering according to any of the preceding claims, wherein the extrudable polymer comprises at least one of the following flame retardant components:
- melamine polyphosphate,
- phosphorus-nitrogen compound,
- mineral filler,
- melamine cyanurate, and
- phosphazene.

13. The covering according to any of the preceding claims, wherein an amount of the flame retardant chemical is in a range between 5 and 20 wt.% calculated from a total dry weight of the flame retardant support layer (320).

14. The covering according to any of the preceding claims, wherein the flame retardant chemical comprises at least one of:
- proprietary nitrogen / sulfur salt,
- inorganic nitrogen / ammonium salt, and
- phosphate ester.

15. A back panel for a refrigerator comprising
- a thermally insulating material (500), and
- a covering (10) of any of the claims 1 to 14.
